# EUROPEAN PATENT APPLICATION

(11) **EP 1 492 039 A2**
(43) Date of publication of application: **29.12.2004**
(21) Application number: 04253125.1
(22) Date of filing: 27.05.2004
(51) Int. Cl.: G06F 17/50, G05B 19/4097

(54) **Persistent compressor airfoils**

(30) Priority: 30.05.2003 US 449439
(71) Applicant: GENERAL ELECTRIC COMPANY, Schenectady, NY 12345 (US)
(72) Inventor: Niedermeier, John D., Loveland, Ohio 45140 (US); Badhrinath, Krishnakumar, Ashburn, Virginia 20148 (US)
(74) Representative: Pedder, James Cuthbert

(57) **Abstract**

A system and method are provided for creating and reparenting a persistent airfoil. Design parameters are used to determine if an airfoil is to be created or reparented. A user selects the location of the airfoil data in a proprietary database. The airfoil data from the proprietary database can be pulled into the Unigraphics part data, exposing only objects that represent the solid airfoil and certain point locations. The solid airfoil is then made from surfaces extracted from original, hidden surfaces, and all the objects belonging to an airfoil are stored in a group. If an appropriate airfoil exists, the airfoil can be reparented, rather than created. When reparenting, all surfaces of the new airfoil are reparented with the surfaces of the original airfoil. All objects belonging to the old airfoil are deleted, and a group of objects belonging to the new airfoil are created and stored.

## Description

The present invention relates to a computer-based method for designing products and, more particularly, to a computer-based method for updating compressor airfoil information for persistent airfoils of a gas turbine engine.

In an aircraft gas turbine engine, the compressor and turbine both comprise a plurality of airfoil blades. Currently, the creation and reparenting of airfoils is a time consuming manual process. A large amount of time is required to manually input and re-link compressor airfoil information from detail designers. This information is necessary, however, as engine programs require an error free update of the airfoil information in order to capture aerodynamic design intent.

It is known to design various products using a computer-aided design (CAD) system, a computer-aided manufacturing (CAM) system, and/or a computer-aided engineering (CAE) system. For convenience, these similar types of systems are referred to herein as CAD systems, where a CAD system is a computer-based product design system implemented in software executing on a workstation. A CAD system allows the user to develop a product design or definition through development of a corresponding product model. The model is then typically used throughout the product development and manufacturing process. An example is the popular Unigraphics system, commercially available from Unigraphics Solutions, Inc., hereinafter "Unigraphics".

Product models of compression and turbine sections of a gas turbine engine, as well as the associated airfoils, are often developed in the Unigraphics system. In order to capture the aerodynamic design intent, compressor airfoil information between various information databases and integrated design databases is required for engine programs throughout the program development. Traditionally, creating and reparenting a persistent airfoil has been a labor-intensive and time-consuming effort.

It would be desirable to provide an error-free, automatic process for updating compressor airfoil information between the databases, particularly a process which uses Unigraphics functionality, so that design intent is captured.

A technique is proposed herein for creating and reparenting a persistent airfoil. The automated procedure that creates airfoils can run inside and outside the Unigraphics system, and is described herein as using Unigraphics functionality. The present invention proposes an automated procedure that creates airfoils in such a way that the airfoil can be reparented without losing the associativity with downstream parts. The automation of persistent airfoil creation and reparenting will allow for performing of subsystem and system level optimization of the engine, and enable high fidelity information to be passed on to preliminary design tools performing optimization.

Accordingly, the present invention provides a system and method for creating and reparenting a persistent airfoil. Design parameters are used to determine if an airfoil is to be created or reparented. A user selects the location of the airfoil data in a proprietary database. The airfoil data from the proprietary database can be pulled into the Unigraphics part data, exposing only objects that represent the solid airfoil and certain point locations. The solid airfoil is then made from surfaces extracted from original, hidden surfaces, and all the objects belonging to an airfoil are stored in a group. If an appropriate airfoil exists, the airfoil can be reparented, rather than created. When reparenting, all surfaces of the new airfoil are reparented with the surfaces of the original airfoil. All objects belonging to the old airfoil are deleted, and a group of objects belonging to the new airfoil are created and stored.

Accordingly, the present invention provides an automatic process for updating airfoil information between information databases and design layouts, capturing design intent while eliminating the need to manually reassociate information. Hence, multiple airfoils can be automatically reparented at any point during the design process, with the links to downstream parts preserved and geometry updated immediately.

The invention will now be described in greater detail, by way of example, with reference to the drawings, in which:-
Fig. 1 is a block diagram illustration of a system for generating a persistent airfoil according to the present invention;
Fig. 2 is a view of a persistent airfoil, created using the Unigraphics functionality in accordance with the present invention; and
Fig. 3 is a flow chart of steps performed to create and reparent a persistent airfoil such as is illustrated in Fig. 2, in accordance with the present invention.

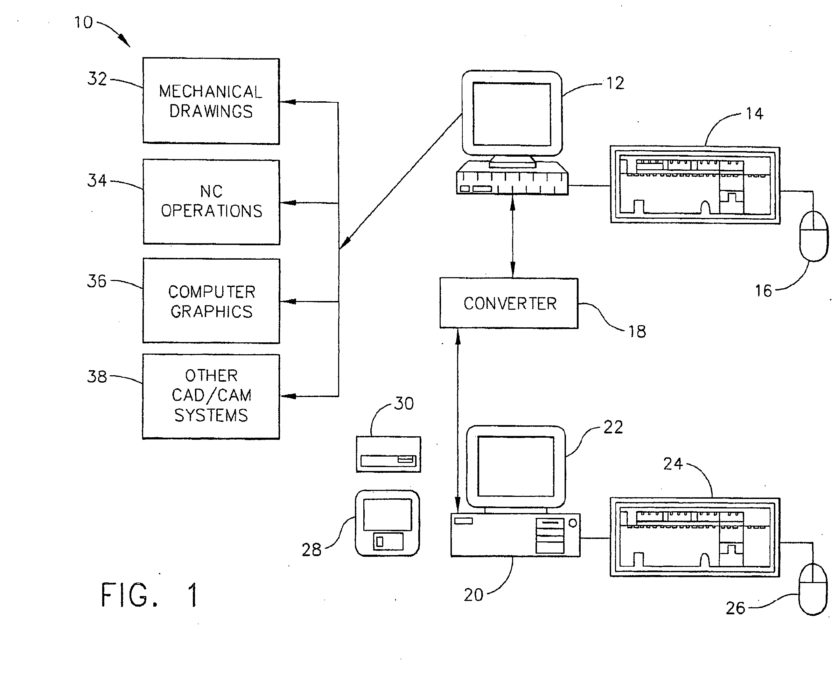

Referring to Fig. 1, there is illustrated a block diagram of a system 10 for updating airfoil information between information databases and design layouts. Persistent airfoil creation and reparenting is one of the building blocks for performing subsystem and system level optimization of the engine. A compressor airfoil designer uses a computer workstation 12, such as a CAD or CAM system, to specify the location of airfoil data in a proprietary database, via input devices such as a keyboard 14 and a mouse device 16. The system 12 may be a commercially available type, such as a Unigraphics CAD/CAM system.

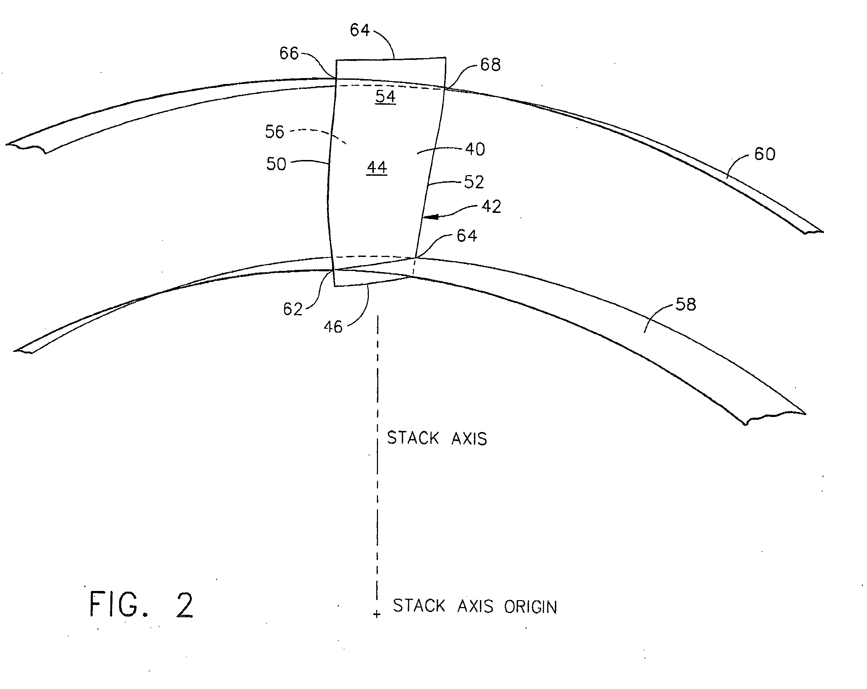

Continuing with Fig. 1, and referring also to Fig. 2, the airfoil group 40 comprises a solid airfoil 42, a mid surface 44, a hub cap 46, a tip cap 48, leading and trailing edge curves 50 and 52, respectively, a suction side 54, a pressure side 56, hub and tip flowpath sheets 58 and 60, respectively, and four points located where the leading and trailing edge curves intersect the hub and tip flowpath sheets, numbered 62 through 68. The surfaces of the airfoil shape, as well as objects that represent the solid airfoil and point locations on the airfoil, are in a commercially available format such as NURBS (Non Uniform Rational B Splines). A converter 18 converts the geometry for the airfoil from a NURBS format into a format compatible with computer 20, such as a personal computer or workstation.

The computer 20 is used to create or reparent an airfoil from the specified design intent. Historically, it has been very difficult to manually input and relink compressor airfoil information from the detail designers, such as when updating information between databases and design layouts. The time consuming manual process of creating and reparenting airfoils is eliminated by the automated procedure of this invention. The computer 20 comprises a processor and a memory, induding random access memory (RAM), read only memory (ROM) and/or other components. Attached to the computer 20 are a monitor 22, a keyboard 24, and a mouse device 26.

The computer 20 operates under control of an operating system stored in the memory to present data, such as objects that represent the solid airfoil and certain point locations, to the designer on the display of the monitor 22, and to accept and process commands from the designer via the keyboard 24 and the mouse device 26. The computer 20 generates the solid airfoil from surfaces extracted from original surfaces, using one or more computer programs or applications, through a graphical user interface. A computer-readable medium, for example one or more removable data storage devices 28 such as a floppy disk drive, or a fixed storage device 30 such as a hard drive, a CD-ROM drive, or a tape drive tangibly embody the operating system and the computer programs implementing this invention.

After creating or reparenting the airfoil, all the objects belonging to the new airfoil are stored in a group, while objects belonging to the old or original airfoil are deleted. The computer 20 can output the stored information to the converter 18, which converts the persistent airfoil design into NURBS format that is compatible with the CAD or CAM system 12. The system 12 can generate mechanical drawings 32, numerical control data 34 for a machining operation, computer graphics 36, any of which can be sent to other systems 38. Those skilled in the art will recognize that the system illustrated in Fig. 1 is not intended to limit this invention. In particular, those skilled in the art will recognize that other alternative hardware environments may be used without departing from the scope of this invention. For example, the computer program for creating and reparenting the airfoil may be implemented directly into the Unigraphics system 12, obviating the need for the converter 18 and the computer 20 and its peripherals.

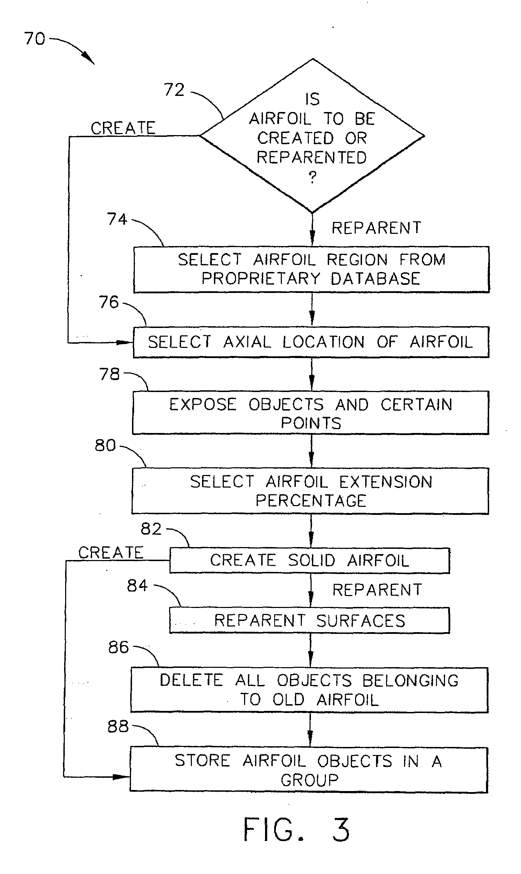

Fig. 3 shows a flowchart 70 setting forth the steps for creating and reparenting a persistent airfoil, by updating airfoil information between information databases and design layouts. At block 72, the system determines whether creation or reparenting of an airfoil is desired. Using design parameters and other known parameters, the system determines if an airfoil exists that can be reparented, or if a new airfoil needs to be created. If an existing airfoil can be reparented, the user proceeds to block 74, to import the airfoil by selecting the airfoil region from the proprietary database. The airfoil data can be pulled into the Unigraphics part data, from the proprietary database, and be translated axially.

Once the selected airfoil for reparenting is available, or to create a new airfoil, the user can proceed to block 76 to select the location of the new or reparented airfoil in the existing airfoil database, such as the proprietary database. At block 78, the user exposes the objects that represent the solid airfoil and certain point locations. Known design parameters, and the placement as determined at block 76, facilitate the conversion, placement and reparenting for the designer or user. With the present invention, the hub and/or tip ends of the airfoil can be modified by whatever percentage of the span of the airfoil, i.e., height of the airfoit, the user desires. Hence, an airfoil can be extended by whatever amount the user desires. This flexibility assures that the surface of the airfoil can intersect some other geometry, such as the airfoil's platform, disk, fillet, etc. At block 80, the user can specify this percentage or extension in the Graphical User Interface (GUI). At block 82, a solid airfoil is made from surfaces extracted from the original surfaces. The solid airfoil will be part of the airfoil group, which also includes a mid surface, hub cap, tip cap, leading and trailing edge curves, suction and pressure sides, hub and tip flowpath sheets, and the leading and trailing edge points at the hub and tip of the airfoil. The flowpath sheets, stack axis, and other components of the airfoil group can be used for all airfoils, including compressor and turbine airfoils.

If the intent is to create a new airfoil, the user at this point can proceed to block 88, to store all the objects belonging to an airfoil group. If the intent is to reparent an airfoil, the user proceeds to block 84 to reparent surfaces of the original airfoil with the new airfoil. At block 86, all the objects belonging to the old airfoil are deleted, so that a group of objects belonging to the new airfoil can be created and stored at block 88. Application of the present invention allows multiple airfoils to be reparented automatically, and new airfoils to be created, and updates all the airfoil information between information databases and design layouts. With the present invention, as many airfoils as desired can be created or reparented at the same time.

The invention is described herein as a method and means for providing an error-free, automatic process for updating airfoil information between databases and design layouts. The persistent airfoils can be created and reparented using, for example, Unigraphics functionality, and can run inside and outside Unigraphics. It will be obvious to those skilled in the art, however, that alternative hardware and software environments can be used without departing from the scope of this invention.

## Claims

1. A system (10) for updating airfoil information between information databases and design layouts, comprising:
a memory (20) for storing user-specified airfoil data;
means for allowing the user to select a location of airfoil data, exposing objects representative of the airfoil (4);
means for providing a solid airfoil (42) from the exposed objects and the airfoil data; and
means (28, 30) for storing all objects belonging to the airfoil in a group.

2. A system (10) as claimed in claim 1 wherein the user-specified airfoil data comprises objects that represent a solid airfoil (42).

3. A system (10) as claimed in claim 1 wherein the user-specified airfoil data comprises point locations (62, 64, 66, 68) of an airfoil.

4. A system (10) as claimed in claim 1 wherein the means for providing a solid airfoil (42) comprises means for creating a solid airfoil (42).

5. A system (10) as claimed in claim 1 wherein the means for providing a solid airfoil (42) comprises means for reparenting an existing airfoil.

6. A method for updating airfoil information between information databases and design layouts, comprising the steps of:
storing user-specified airfoil data in a memory (20);
allowing the user to select a location of airfoil data (76), exposing objects representative of the airfoil (78);
providing a solid airfoil (40) from the exposed objects and the airfoil data; and
storing (28, 30) all objects belonging to the airfoil in a group.

7. A method as claimed in claim 6 wherein the user-specified airfoil data comprises objects that represent a solid airfoil (42).

8. A method as claimed in claim 6 wherein the user-specified airfoil data comprises point locations (62, 64, 66, 68) of an airfoil.

9. A method as claimed in claim 6 wherein the step of providing a solid airfoil (42) comprises the step of creating a solid airfoil (42).

10. A method as claimed in claim 6 wherein the step of providing a solid airfoil (42) comprises the step of reparenting an existing airfoil.
